# EUROPEAN PATENT APPLICATION

(11) **EP 4 597 254 A1**
(43) Date of publication of application: **06.08.2025**
(21) Application number: 23894856.6
(22) Date of filing: 01.11.2023
(51) Int. Cl.: G06F 1/16, H04R 7/16, H04R 9/02, G04G 17/04

(54) **WEARABLE ELECTRONIC DEVICE COMPRISING CONDUCTIVE PIN**

(30) Priority: 22.11.2022 KR 20220157009; 06.12.2022 KR 20220169045
(71) Applicant: Samsung Electronics Co., Ltd., Suwon-si, Gyeonggi-do 16677 (KR)
(72) Inventor: OH, Chunghwan, Suwon-si, Gyeonggi-do 16677 (KR); KIM, Jongsoo, Suwon-si, Gyeonggi-do 16677 (KR); ROH, Jaeyoung, Suwon-si, Gyeonggi-do 16677 (KR); KIM, Jeongseob, Suwon-si, Gyeonggi-do 16677 (KR); JUN, Intae, Suwon-si, Gyeonggi-do 16677 (KR)
(74) Representative: Walaski, Jan Filip
(86) International application number: PCT/KR2023/017247
(87) International publication number: WO 2024/111927

(57) **Abstract**

A wearable electronic device may be provided. The wearable electronic device may comprise: a housing; a speaker module disposed on the housing and including a diaphragm and a speaker frame in which the diaphragm is accommodated; a plurality of conductive pins at least partially disposed within the speaker frame; and a processor configured to, on the basis of resistance values sensed at the plurality of conductive pins, determine whether ingress of external moisture into the wearable electronic device occurs.

## Description

### [Technical Field]

Various embodiments of the disclosure relate to a wearable electronic device including a conductive pin.

### [Background Art]

The term "electronic device" may mean a device performing a particular function according to its equipped program, such as a home appliance, an electronic scheduler, a portable multimedia player, a mobile communication terminal, a tablet PC, a video/sound device, a desktop PC or laptop computer, a navigation for automobile, etc. For example, the electronic devices may output stored information as voices or images. As electronic devices are highly integrated, and high-speed, high-volume wireless communication becomes commonplace, an electronic device, such as a mobile communication terminal, is recently being equipped with various functions. For example, an electronic device comes with various integrated functions, including an entertainment function, such as playing video games, a multimedia function, such as replaying music/videos, a communication and security function for mobile banking, and a scheduling or e-wallet function. These electronic devices have been downsized to be conveniently carried by users. As electronic, communication technology develops, these electronic devices are becoming smaller and lighter enough to be worn on the body without discomfort.

### [Detailed Description of the Invention]

### [Technical Solution]

According to an embodiment of the disclosure, a wearable electronic device may comprise a housing, a speaker module disposed on the housing, the speaker module comprising a speaker frame and a diaphragm disposed in the speaker frame, a plurality of conductive pins at least partially positioned in the speaker frame, and a processor configured to determine whether external moisture is introduced into the wearable electronic device based on a resistance value detected at the plurality of conductive pins.

According to an embodiment of the disclosure, an electronic device may comprise a housing, a speaker module disposed on the housing and including a diaphragm and a speaker frame receiving the diaphragm, and a conductive pin including a front end area protruding from an inner surface of a side wall of the speaker frame, a rear end area opposite to the front end area and exposed to an outside of the speaker frame, and a body portion extending from the front end area to the rear end area and surrounded by the speaker frame.

### [Brief Description of Drawings]

FIG. 1 is a block diagram illustrating an electronic device in a network environment according to an embodiment of the disclosure;
FIG. 2 is a front perspective view illustrating an electronic device according to an embodiment of the disclosure;
FIG. 3 is a rear perspective view illustrating the electronic device of FIG. 2 according to an embodiment of the disclosure;
FIG. 4 is an exploded perspective view illustrating an electronic device according to an embodiment of the disclosure;
FIG. 5 is a perspective view illustrating an electronic device including a speaker mounted on a housing according to an embodiment of the disclosure;
FIG. 6A is a cross-sectional perspective view taken along line A-A of FIG. 5 according to an embodiment of the disclosure; FIG. 6B is a cross-sectional view taken along line A-A of FIG. 5 according to an embodiment of the disclosure;
FIG. 7 is a perspective view illustrating a speaker module according to an embodiment of the disclosure;
FIG. 8 is an exploded perspective view illustrating a speaker module according to an embodiment of the disclosure;
FIG. 9 is a front perspective view illustrating a speaker module according to an embodiment of the disclosure;
FIG. 10 is a rear perspective view illustrating a speaker module according to an embodiment of the disclosure;
FIG. 11 is a perspective view illustrating a conductive pin according to the disclosure;
FIG. 12 is a perspective view illustrating a speaker module coupled with a conductive pin according to the disclosure;
FIG. 13 is a rear perspective view illustrating a speaker module according to an embodiment of the disclosure;
FIG. 14 is a view schematically illustrating an electrical connection of an electronic device according to an embodiment of the disclosure;
FIG. 15 is a view illustrating a state in which moisture is introduced into an electronic device according to an embodiment of the disclosure;
FIG. 16 is a view illustrating a setting of a water lock mode according to an embodiment of the disclosure;
FIG. 17 is a perspective view illustrating a speaker module according to an embodiment of the disclosure;
FIG. 18 is an exploded perspective view illustrating a speaker module according to an embodiment of the disclosure; and
FIG. 19 is a cross-sectional view illustrating an electronic device including a conductive pin mounted on a housing according to an embodiment of the disclosure.

### [Mode for Carrying out the Invention]

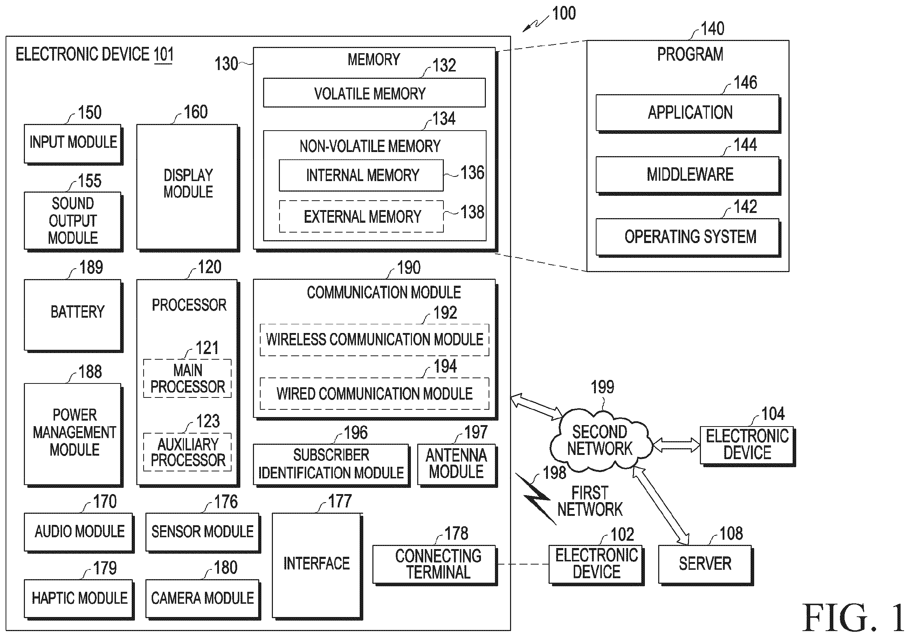

FIG. 1 is a block diagram illustrating an electronic device in a network environment according to an embodiment of the disclosure.

Referring to FIG. 1, the electronic device 101 in the network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In an embodiment, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display 160 may include, for example, a display, a hologram device, or a projector and control circuitry to control a corresponding one of the display, hologram device, and projector. According to an embodiment, the display 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, a SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module may include an antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, instructions or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

The electronic device according to various embodiments of the disclosure may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

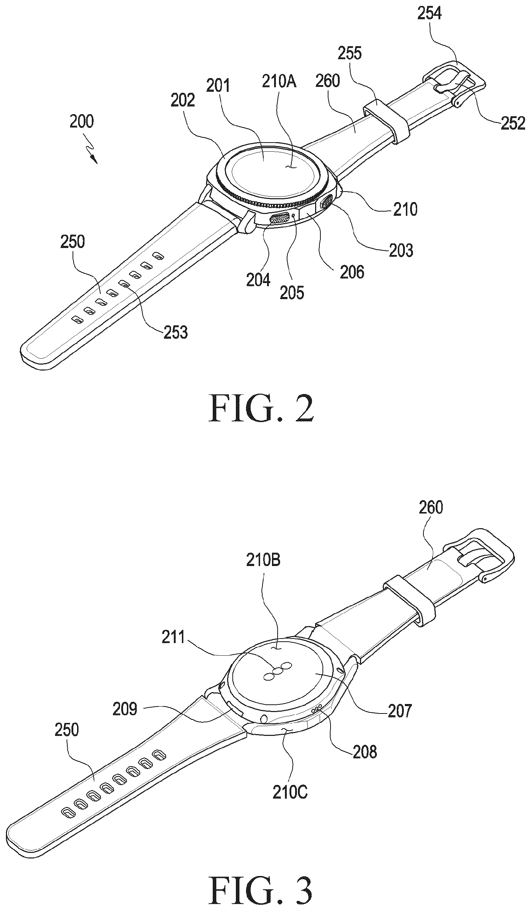

FIG. 2 is a front perspective view illustrating an electronic device according to various embodiments of the disclosure. FIG. 3 is a rear perspective view illustrating the electronic device of FIG. 2.

Referring to FIGS. 2 and 3, an electronic device 200 is a watch-type electronic device and may be worn by the user. For example, the electronic device 200 may be a smart watch or a wearable electronic device that may be worn on the user's wrist. The configuration of the electronic device 200 may be identical in whole or part to the configuration of the electronic device 101 of FIG. 1.

An electronic device 200 according to an embodiment may include a housing 210 including a first surface (or front surface) 210A, a second surface (or rear surface) 210B, and a side surface 210C surrounding the space between the first surface 210A and the second surface 210B and binding members 250 and 260 connected to at least part of the housing 210 and configured to allow the electronic device 200 to be removably worn on the user's body portion (e.g., the user's wrist or ankle).

In another embodiment (not shown), the housing 210 may denote a structure forming part of the first surface 210A, the second surface 210B, and the side surfaces 210C. According to an embodiment, at least part of the first surface 210A may have a substantially transparent front plate 201 (e.g., a glass plate or polymer plate including various coat layers). The second surface 210B may be formed by a rear plate 207 that is substantially opaque. The rear plate 207 may be formed of, e.g., laminated or colored glass, ceramic, polymer, metal (e.g., aluminum (Al), stainless steel (STS), magnesium (Mg), or titanium (Ti)), or a combination of at least two thereof. The side surface 210C may be formed by a side bezel structure (or a "side member") 206 that couples to the front plate 201 and the rear plate 207 and includes a metal and/or polymer. According to an embodiment, the rear plate 207 and the side bezel plate 206 may be integrally formed together and include the same material (e.g., a metal, such as aluminum). The binding members 250 and 260 may be formed of various materials in various shapes. A uni-body structure or multiple unit links which is flexible may be formed of fabric, leather, rubber, urethane, metal, ceramic, or a combination of at least two thereof.

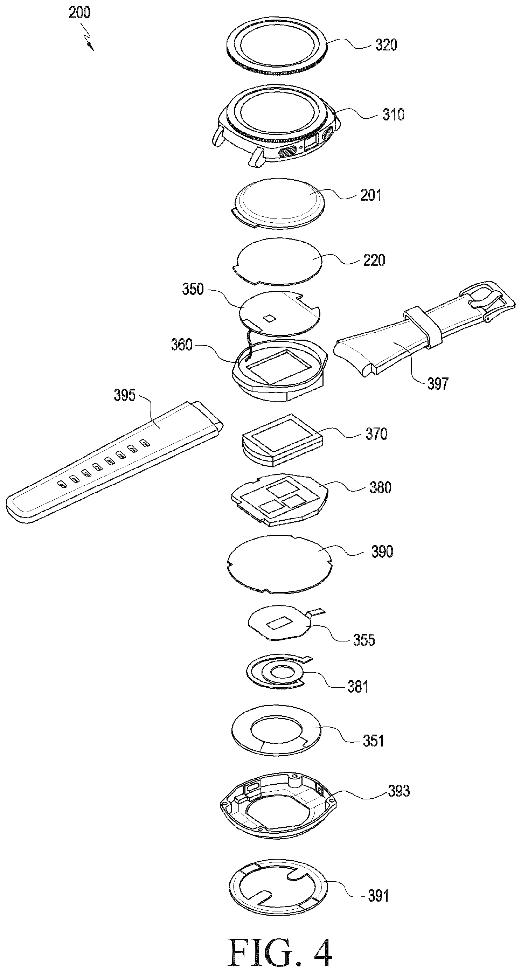

According to an embodiment, the electronic device 200 may include at least one or more of a display (e.g., the display 220 of FIG. 4), audio modules 205 and 208, a sensor module 211, key input devices 202, 203, and 204, and a connector hole 209. According to an embodiment, the electronic device 200 may exclude at least one (e.g., the key input devices 202, 203, and 204, connector hole 209, or sensor module 211) of the components or may add other components.

The display 220 may visually provide information to the outside (e.g., the user) of the electronic device 200. The display 220 may include, e.g., a display panel, a hologram device, or a projector and a control circuit for controlling the device. According to an embodiment, the display 220 may include a touch sensor configured to detect a touch, or a pressure sensor configured to measure the intensity of a force generated by the touch.

The display 220 may be visually exposed through a significant portion of the front plate 201. The display 220 may have a shape corresponding to the shape of the front plate 201, e.g., a circle, ellipse, or polygon. The display 220 may be coupled with, or disposed adjacent, a touch detection circuit, a pressure sensor capable of measuring the strength (pressure) of touches, and/or fingerprint sensor.

The audio modules 205 and 208 may convert a sound into an electrical signal and vice versa. The audio modules 205 and 208 may include a microphone hole 205 and a speaker hole 208. The microphone hole 205 may have a microphone inside to obtain external sounds. According to an embodiment, there may be a plurality of microphones to be able to detect the direction of a sound. The speaker hole 208 may be used for an external speaker or a receiver for phone talks. According to an embodiment, the speaker hole 208 and the microphone hole 205 may be implemented as a single hole, or a speaker may be included without the speaker hole 208 (e.g., a piezo speaker).

The sensor module 211 may produce an electrical signal or data value corresponding to the internal operation state or external environment state of the electronic device 200. The sensor module 211 may include, e.g., a biometric sensor module 211 (e.g., a heartrate monitor (HRM) sensor) disposed on the second surface 210B of the housing 210. The electronic device 200 may include a sensor module not shown, e.g., at least one of a gesture sensor, a gyro sensor, a barometric sensor, a magnetic sensor, an acceleration sensor, a grip sensor, a color sensor, an infrared (IR) sensor, a biometric sensor, a temperature sensor, a humidity sensor, or an illuminance sensor.

The key input devices 202, 203, and 204 may receive a command or data to be used by other component (e.g., the processor) of the electronic device 200, from the outside (e.g., a user) of the electronic device 200. The key input devices 202, 203, and 204 may include a wheel key 202 disposed on the first surface 210A of the housing 210 to be rotatable in at least one direction and/or key input devices 203 and 204 disposed on the side surface 210C of the housing 210. The wheel key may have a shape corresponding to the shape of the front plate 201. According to another embodiment, the electronic device 200 may exclude all or some of the above-mentioned key input devices 202, 203, and 204, and the excluded key input devices 202, 203, and 204 may be implemented in other forms, e.g., as soft keys on the display 220. The key input devices 203 and 204 may be referred to as side keys or side buttons. The connector hole 209 may receive a connector (e.g., a universal serial bus (USB) connector) for transmitting and receiving power and/or data to/from an external electronic device. Another connector hole (not shown) may be included for receiving a connector for transmitting and receiving audio signals to/from the external electronic device. The electronic device 200 may further include a connector cover (not shown) to cover at least part of, e.g., the connector hole 209 and preventing undesirable materials from entering the connector hole.

The binding members 250 and 260 may detachably be bound to at least portions of the housing 210 using a connecting member (e.g., the connecting member 430 of FIG. 4). The binding members 250 and 260 may include one or more of a fixing member 252, fixing member coupling holes 253, a band guide member 254, and a band fixing ring 255.

The fixing member 252 may be configured to allow the housing 210 and the binding members 250 and 260 to be fixed to the user's body portion (e.g., wrist or ankle). The fixing member coupling holes 253 may fix the housing 210 and the binding members 250 and 260 to the user's body portion, corresponding to the fixing member 252. The band guide member 254 may be configured to restrict movement of the fixing member 252 to a certain range when the fixing member 252 fits into one of the fixing member coupling holes 253, thereby allowing the binding members 250 and 260 to be tightly bound onto the user's body portion. The band fixing ring 255 may limit the range of movement of the binding members 250 and 260, with the binding member 252 fitted into one of the binding member coupling holes 253.

FIG. 4 is an exploded perspective view illustrating an electronic device according to various embodiments of the disclosure.

Referring to FIG. 4, the electronic device 200 may include a side bezel structure 310, a wheel key 320, a front plate 201, a display 220, a first antenna 350, a second antenna 351, a sensor module 355, a supporting member 360, a battery 370, a printed circuit board 380 (e.g., a first printed circuit board), a flexible printed circuit board 381 (e.g., a second printed circuit board), a sealing member 390, a rear plate 393, a rear cover 391, and binding members 395 and 397. At least one of the components of the electronic device 200 may be the same or similar to at least one of the components of the electronic device 200 of FIG. 2 or 3 and no duplicate description is made below. The supporting member 360 may be disposed inside the electronic device 200 to be connected with the side bezel structure 310 or integrated with the side bezel structure 310. The supporting member 360 may be formed of, e.g., a metal and/or non-metallic material (e.g., polymer). The display 220 may be joined onto one surface of the supporting member 360, and the printed circuit board 380 may be joined onto the opposite surface of the supporting member 274. A processor, memory, and/or interface may be mounted on the printed circuit board 380 and/or the auxiliary printed circuit board 381.

According to various embodiments, the processor may include one or more of, e.g., a central processing unit, an application processor, a graphic processing unit (GPU), a sensor processor, or a communication processor. According to an embodiment, the processor may execute, for example, software (e.g., a program) to control at least one other component (e.g., a hardware or software component) of the electronic device 200 coupled with the processor, and may perform various data processing or computation.

According to an embodiment, the memory may include, e.g., a volatile or non-volatile memory. The interface may include, e.g., a high definition multimedia interface (HDMI), a universal serial bus (USB) interface, a secure digital (SD) card interface, and/or an audio interface. The interface may electrically or physically connect, e.g., the electronic device 200 with an external electronic device and may include a USB connector, an SD card/multimedia card (MMC) connector, or an audio connector.

According to an embodiment, the side bezel structure 310 may function as an antenna of the electronic device 200. For example, a communication module (e.g., communication module 190 of FIG. 2) may transmit a wireless signal to the outside or receive a wireless signal from the outside using the side bezel structure 310. According to an embodiment, the side bezel structure 310 may be electrically connected to the communication module 190 positioned on the printed circuit board 380. According to an embodiment, the configuration of the side bezel structure 310 may be identical in whole or part to the configuration of the antenna module (e.g., the antenna module 197 of FIG. 2). According to an embodiment, the side bezel structure 310 may be identical in whole or part to the configuration of the housing 210 of FIG. 2 or 3.

According to an embodiment, the battery 370 may be a device for supplying power to at least one component of the electronic device 200. The battery 189 may include, e.g., a primary cell which is not rechargeable, a secondary cell which is rechargeable, or a fuel cell. At least a portion of the battery 370 may be disposed on substantially the same plane as the printed circuit board 380. The battery 370 may be integrally or detachably disposed inside the electronic device 200.

According to an embodiment, the first antenna 350 may be disposed between the display 220 and the supporting member 360. The first antenna 350 may include, e.g., a near-field communication (NFC) antenna, a wireless charging antenna, and/or a magnetic secure transmission (MST) antenna. In an embodiment (e.g., FIG. 4), the first antenna 350 may be an NFC antenna. The first antenna 350 may perform short-range communication with an external device, wirelessly transmit/receive power necessary for charging, or transmit magnetic-based signals including payment data or short-range communication signals. According to an embodiment of the present invention, an antenna structure may be formed by a portion or combination of the side bezel structure 310 and/or the supporting member 360.

According to an embodiment, the second antenna 351 may be disposed between the circuit board 380 and the rear plate 393. The second antenna 351 may include, e.g., a near-field communication (NFC) antenna, a wireless charging antenna, and/or a magnetic secure transmission (MST) antenna. In an embodiment (e.g., FIG. 4), the second antenna 351 may be a wireless charging antenna. The second antenna 351 may perform short-range communication with an external device, wirelessly transmit/receive power necessary for charging, or transmit magnetic-based signals including payment data or short-range communication signals. According to another embodiment, an antenna structure may be formed of a portion or combination of the side bezel structure 310 and/or the rear plate 393.

According to an embodiment, the sealing member 390 may be positioned between the side bezel structure 310 and the rear plate 393. The sealing member 390 may be configured to block moisture or foreign bodies that may enter the space surrounded by the side bezel structure 310 and the rear plate 393, from the outside.

According to an embodiment, the rear cover 391 may be positioned under the rear plate 393. At least a portion of the rear cover 391 may be exposed to the outside of the electronic device 200. The rear cover 391 may cover at least a portion of the sensor module 355 and/or the auxiliary printed circuit board 381.

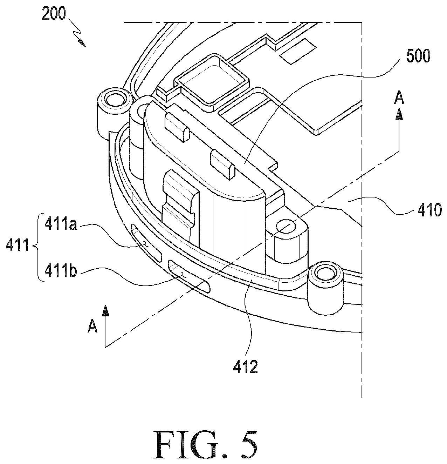

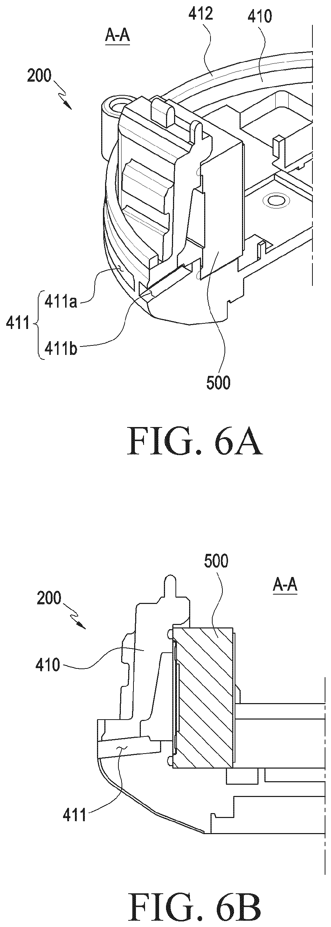

FIG. 5 is a perspective view illustrating an electronic device including a speaker mounted on a housing according to an embodiment of the disclosure. FIG. 6A is a cross-sectional perspective view taken along line A-A of FIG. 5 according to an embodiment of the disclosure. FIG. 6B is a cross-sectional view taken along line A-A of FIG. 5 according to an embodiment of the disclosure.

Referring to FIGS. 5, 6A and/or 6B, an electronic device may include a housing 410 and a speaker module 500. The configuration of the speaker module 500 of FIGS. 5, 6A and/or 6B may be identical in whole or portion to the configuration of the sound output module 155 of FIG. 1.

According to an embodiment, the housing 410 may receive the speaker module 500. For example, the speaker module 500 may be mounted on the housing 410. According to an embodiment, the configuration of the housing 410 of FIGS. 5, 6A and/or 6B may be identical in whole or portion to the configuration of the housing 210 of FIG. 2 and/or the rear plate 393 of FIG. 4. For example, the housing 410 may be connected to the supporting member 360.

According to an embodiment, the housing 410 may include a speaker hole 411 for providing a path of sound output from the speaker module 500. According to an embodiment, the speaker hole 411 may be referred to as a sound path. For example, the sound or vibration generated by the speaker module 500 may be transferred to the outside of the electronic device 200 through the speaker hole 411. The speaker hole 411 may be an empty space formed in the housing 410. According to an embodiment, the speaker hole 411 may include a plurality of speaker holes 411a and 411b. For example, the speaker hole 411 may include a first speaker hole 411a and a second speaker hole 411b which is at least partially spaced apart from the first speaker hole 411a. Moisture outside the electronic device 200 may flow into the housing 410 through the speaker hole 411. For example, water may flow into the speaker module 500 through the speaker hole 411. By the sound generated by the speaker module 500, at least a portion of the moisture introduced through the speaker hole 411 may be discharged to the outside of the electronic device 200.

According to an embodiment, the electronic device 200 may include a sealing structure 412 (e.g., the sealing member 390 of FIG. 4) positioned on the housing 410. The sealing structure 412 may be positioned between the housing 410 (e.g., the rear plate 393 of FIG. 4) and the supporting member (e.g., the supporting member 360 of FIG. 4). The sealing structure 412 may block moisture and/or foreign substances introduced into the space between the housing 410 and the supporting member 360.

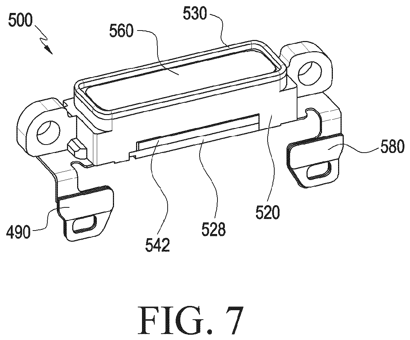

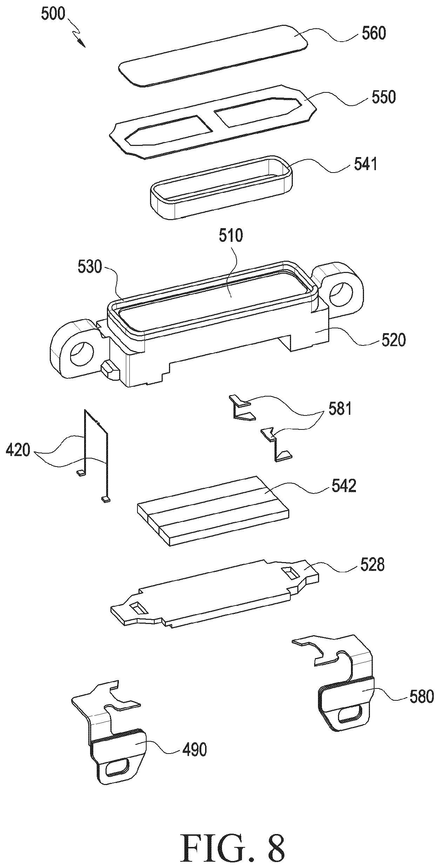

FIG. 7 is a perspective view illustrating a speaker module according to an embodiment of the disclosure. FIG. 8 is an exploded perspective view illustrating a speaker module according to an embodiment of the disclosure.

The configuration of the speaker module 500 of FIGS. 7 and/or 8 may be identical in whole or portion to the configuration of the speaker module 500 of FIGS. 5, 6A and/or 6B.

According to an embodiment, the speaker module 500 may convert an electrical signal into sound. For example, the speaker module 500 may include a diaphragm 510 and a coil 541 configured to vibrate the diaphragm 510. According to an embodiment, the diaphragm 510 may be a liquid silicon rubber diaphragm (LSR DP). According to an embodiment, the coil 541 may vibrate the diaphragm 510 based on pulse width modulation (PWM). The coil 541 may be referred to as a voice coil. According to an embodiment, at least a portion of the diaphragm 510 and at least a portion of the coil 541 may be received in the speaker frame 520. According to an embodiment, the diaphragm 510 may be coupled or connected to the speaker frame 520.

According to an embodiment, the speaker module 500 may include a speaker frame 520. According to an embodiment, the speaker frame 520 may form at least a portion of the exterior of the speaker module 500 and receive at least some of the components of the speaker module 500. According to an embodiment, the diaphragm 510 may be integrally formed with the speaker frame 520.

According to an embodiment, the speaker module 500 may include a waterproof member 530. The waterproof member 530 may prevent the inflow of moisture between the housing (e.g., the housing 410 of FIG. 5) and the speaker module 500 (e.g., the speaker frame 520). According to an embodiment, the waterproof member 530 may be formed in a closed curve shape. The waterproof member 530 may be referred to as an O-ring.

According to an embodiment, the speaker module 500 may include a yoke 528. According to an embodiment, the yoke 528 may concentrate a magnetic field generated by the magnet 542. The yoke 528 may form a portion (e.g., the rear surface) of the exterior of the speaker module 500. In an embodiment, the yoke 528 may be referred to as a portion of the speaker frame 520.

According to an embodiment, the speaker module 500 may include a magnet 542. At least a portion of the magnet 542 may face the coil 541. The magnetic field generated by the magnet 542 may be transferred to the coil 541.

According to an embodiment, the speaker module 500 may include a protection member 550. The protection member 550 may be positioned on an upper portion of the diaphragm 510. The protection member 550 may reduce damage to the diaphragm 510 due to an external material. According to an embodiment, the protection member 550 may include a metal (e.g., stainless steel). According to an embodiment, the protection member 550 may be positioned above the front end area 421 of the conductive pin 420 (in the +Z direction).

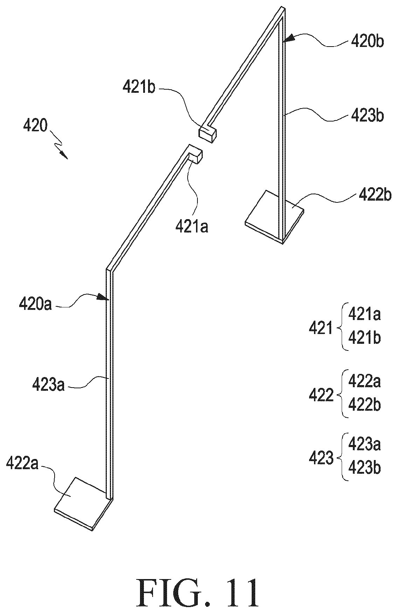

According to an embodiment, the protection member 550 may be designed in a shape for discharging moisture present in the front end area (e.g., the front end area 421 of FIG. 11) of the conductive pin 420. For example, the protection member 550 may have a width for discharging moisture present in the front end area 421 of the conductive pin 420.

According to an embodiment, the speaker module 500 may include a protective screen 560. The protective screen 560 may reduce the inflow of foreign substances from the outside of the speaker module 500. For example, the protective screen 560 may block the passage of particles or materials larger than a designated size.

According to an embodiment, the speaker module 500 may include at least one connecting member 581 for transferring a signal (e.g., power) transferred from the processor to the coil 541. The connecting member 581 may be formed of a conductive material. The connecting member 581 may be electrically connected to a flexible printed circuit board (FPCB) 580.

According to an embodiment, the electronic device (e.g., the electronic device 200 of FIG. 2) may include a conductive pin 420 and a flexible printed circuit board 490 electrically connected to the conductive pin 420. The flexible printed circuit board 490 may electrically connect the conductive pin 420 to the processor (e.g., the processor 120 of FIG. 1). At least a portion of the conductive pin 420 may be positioned within the speaker frame 520. For example, the conductive pin 420 may penetrate at least a portion of the speaker frame 520.

According to an embodiment, the conductive pin 420 may be referred to as a component coupled to the speaker module 500. For example, the speaker module 500 coupled with the conductive pin 420 may be referred to as a speaker assembly. According to an embodiment, the conductive pin 420 may be referred to as a component separate from the speaker module 500.

According to an embodiment, the processor (e.g., the processor 120 of FIG. 1) may determine whether moisture is introduced into the electronic device 200 using the conductive pin 420. The conductive pin 420 may be referred to as a water checker and/or a moisture detection electrode. A structure of the conductive pin 420 is described below.

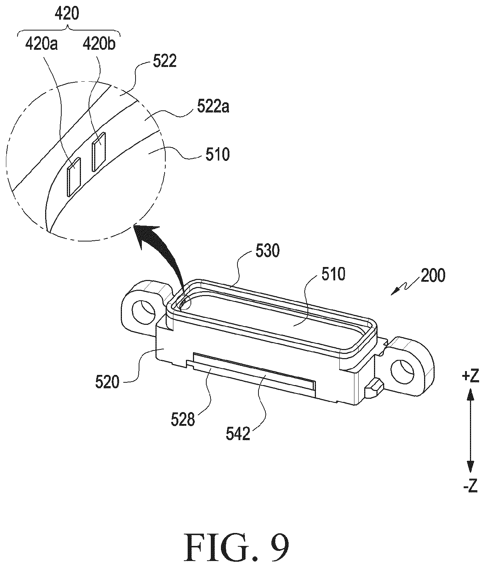

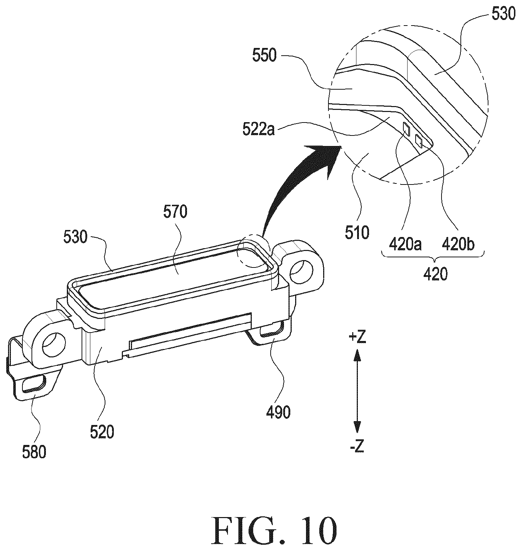

FIG. 9 is a front perspective view illustrating a speaker module according to an embodiment of the disclosure. FIG. 10 is a rear perspective view illustrating a speaker module according to an embodiment of the disclosure. FIG. 11 is a perspective view illustrating a conductive pin according to the disclosure.

Referring to FIGS. 9, 10, and/or 11, an electronic device 200 may include a conductive pin 420 and a speaker module 500. The configuration of the conductive pin 420 and the speaker module 500 of FIGS. 9, 10, and/or 11 may be identical in whole or portion to the configuration of the conductive pin 420 and the speaker module 500 of FIG. 8.

According to an embodiment, at least a portion of the conductive pin 420 may be disposed within the speaker frame 520. For example, at least a portion of the body portion 423 of the conductive pin 420 may be received in the speaker frame 520. The speaker frame 520 may include a receiving hole for receiving the body portion 423, and may surround at least a portion of the body portion 423.

According to an embodiment, the conductive pin 420 may include an end area (e.g., the front end area 421 and the rear end area 422) exposed to the outside of the speaker frame 520. The front end area 421 may be positioned in front of the speaker module 500. The rear end area 422 may be positioned behind the speaker module 500. For example, the front end area 421 and the rear end area 422 may be positioned in different directions with respect to some components (e.g., the magnet 542 and/or the yoke 528 of FIG. 8) of the speaker module 500. According to an embodiment, the front end area 421 may be referred to as a first end area 421. The rear end area 422 may be referred to as a second end area 422.

According to an embodiment, the front end area 421 may be exposed to the outside of the speaker frame 520. For example, the speaker frame 520 may include a side wall 522. The side wall 522 may be positioned in an inner space defined by the waterproof member 530. According to an embodiment, the side wall 522 may be referred to as an inner wall. According to an embodiment, the side wall 522 may have a closed curve shape. The front end area 421 may protrude from the inner surface 522a of the side wall 522.

According to an embodiment, the front end area 421 of the conductive pin 420 may be positioned between the diaphragm 510 and the protective screen 560. Moisture adjacent to the front end area 421 may be discharged to the outside of the electronic device 200 based on the sound generated by the speaker module 500. For example, at least a portion of the moisture introduced into the electronic device 200 may pass through the speaker hole 411 and be discharged to the outside of the electronic device 200 based on the vibration generated by the diaphragm 510.

According to an embodiment, the conductive pin 420 may include a body portion 423 positioned between the front end area 421 and the rear end area 422. At least a portion of the body portion 423 may be received in the speaker frame 520. The electrical signal sensed in the front end area 421 may pass through the body portion 423 and be transferred to the rear end area 422. The rear end area 422 may be referred to as a connection portion for connection with the flexible printed circuit board 490.

According to an embodiment, the electronic device 200 may detect a resistance using the conductive pin 420. For example, the processor (e.g., the processor 120 of FIG. 1) of the electronic device 200 may determine the resistance value detected in the front end area 421 of the conductive pin 420. A portion (e.g., the front end area 421) of the conductive pin 420 may be exposed to the outside of the speaker module 500.

According to an embodiment, the conductive pin 420 may include a plurality of conductive pins 420a and 420b. For example, the conductive pin 420 may include a first conductive pin 420a and a second conductive pin 420b spaced apart from the first conductive pin 420a.

According to an embodiment, the processor (e.g., the processor 120 of FIG. 1) may determine whether external moisture is introduced into the electronic device 200 based on the resistance values detected by the plurality of conductive pins 420a and 420b. For example, the processor 120 may determine whether moisture is introduced based on the resistance value between the first conductive pin 420a and the second conductive pin 420b. According to an embodiment, the processor 120 may determine the resistance value between the first front end area 421a of the first conductive pin 420a and the second front end area 421b of the second conductive pin 420b. According to an embodiment, when the resistance value between the first conductive pin 420a and the second conductive pin 420b is lower than a designated resistance value, the processor 120 may determine that moisture has been introduced into the inside of the electronic device 200 (e.g., a space between the first conductive pin 420a and the second conductive pin 420b).

According to an embodiment, when the processor 120 determines that moisture has been introduced into the inside of the electronic device 200 (e.g., the space between the first conductive pin 420a and the second conductive pin 420b), the processor 120 may perform a designated operation. For example, the processor 120 may perform a water lock mode based on whether moisture is introduced. The water lock mode may be a function for blocking unintended touch and/or input by a fluid (e.g., water). For example, the water lock mode may include an operation of blocking an input to a component (e.g., the display 220 of FIG. 4) of the electronic device 200.

According to an embodiment, the memory (e.g., the memory 130 of FIG. 1) may store the reference resistance value between the first conductive pin 420a and the second conductive pin 420b corresponding to a state in which moisture is not introduced. When the resistance value between the first conductive pin 420a and the second conductive pin 420b is lower than a reference resistance value stored in the memory 130, the processor 120 may determine that moisture has been introduced into the electronic device 200.

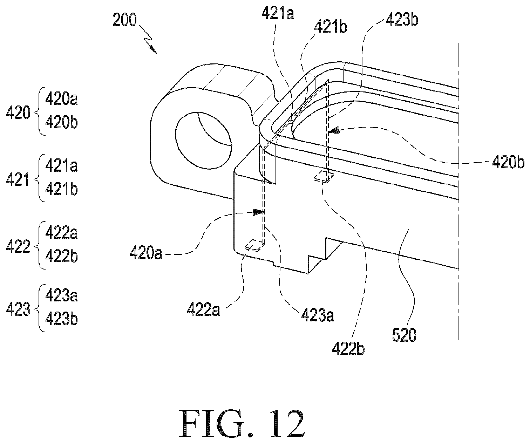

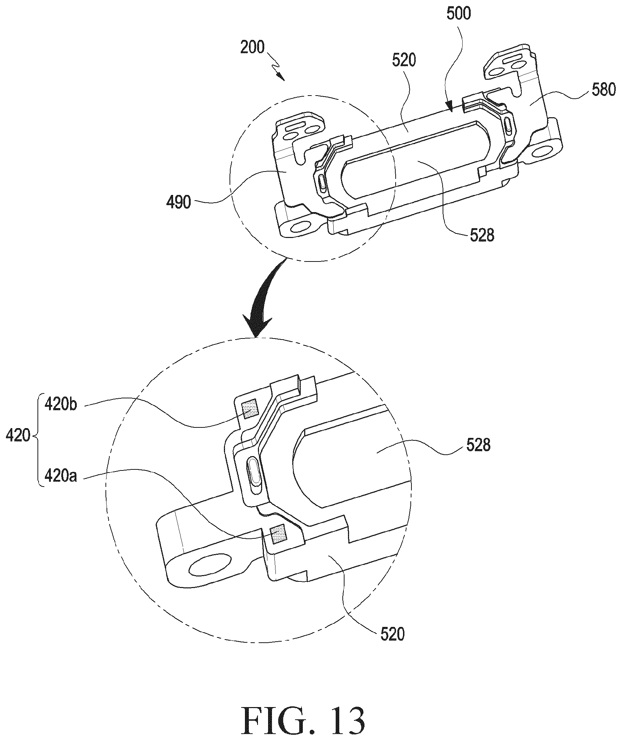

FIG. 12 is a perspective view illustrating a speaker module coupled with a conductive pin according to the disclosure. FIG. 13 is a rear perspective view illustrating a speaker module according to an embodiment of the disclosure.

Referring to FIGS. 12 and/or 13, an electronic device 200 may include a conductive pin 420 and a speaker frame 520. The configuration of the conductive pin 420 and the speaker module 500 of FIGS. 12 and/or 13 may be identical in whole or portion to the configuration of the conductive pin 420 and/or the speaker module 500 of FIGS. 9, 10, and/or 11.

According to an embodiment, the conductive pin 420 may be coupled to the speaker frame 520. For example, a portion (e.g., the front end area 421 and/or the rear end area 422) of the conductive pin 420 may be exposed to the outside of the speaker frame 520, and another portion (e.g., the body portion 423) may be positioned inside the speaker frame 520. For example, the body portion 423 may be surrounded by the speaker frame 520.

According to an embodiment, the conductive pin 420 may be coupled to the speaker frame 520 using an insert-molding process. For example, the material of the conductive pin 420 and the material of the speaker frame 520 may be different from each other. In an embodiment, the conductive pin 420 may be manufactured using a conductive metal (e.g., stainless steel), and the speaker frame 520 may be manufactured using a resin. The conductive pin 420 and the speaker frame 520 may be manufactured through injection-molding in a state in which the material of the conductive pin 420 is inserted into the material of the speaker frame 520.

According to an embodiment, at least a portion (e.g., the rear end area 422 of FIG. 12) of the conductive pin 420 may be exposed to the outside of the speaker frame 520. For example, the first rear end area 422a of the first conductive pin 420a and the second rear end area 422b of the second conductive pin 420b may be exposed to the outside of the speaker frame 520. The rear end areas 422a and 422b may be connected to the flexible printed circuit board 490.

For example, the electrical signal obtained in the front end area 421a or 421b of the conductive pin 420 may be transferred to the flexible printed circuit board 490 through the body portion 423 and the rear end area 422a or 422b. The flexible printed circuit board 490 may be connected to a processor (e.g., the processor 120 of FIG. 1).

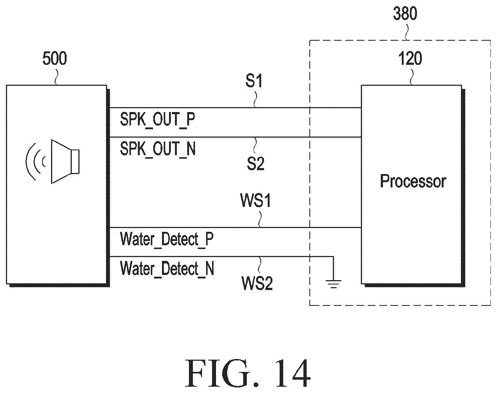

FIG. 14 is a view schematically illustrating an electrical connection of an electronic device according to an embodiment of the disclosure.

Referring to FIG. 14, a speaker module 500 (e.g., the speaker module 500 of FIG. 7) may be electrically connected to a processor 120 (e.g., the processor 120 of FIG. 1) positioned on a circuit board 380 (e.g., the circuit board 380 of FIG. 4).

According to an embodiment, the speaker module 500 may be connected to the processor 120 using a first signal line S1 and a second signal line S2. For example, the first signal line S1 of the speaker module 500 may be a positive line, and the second signal line S2 may be a negative signal line. The speaker module 500 may operate based on a signal generated by the processor 120.

According to an embodiment, the electrical signal obtained from the conductive pin (e.g., the conductive pin 420 of FIG. 11) may be transferred to the processor 120 and/or the circuit board 380 through the first signal line WS1 and the second signal line WS2.

The electrical signal obtained from the conductive pin 420 may be transferred to the processor 120 through the first signal line WS. The first signal line WS1 may be connected to an analog to digital converter (ADC) port of the processor 120 capable of identifying or detecting resistance. The processor 120 may determine whether the electronic device 200 (e.g., the electronic device 200 of FIG. 2) is submerged based on the electrical signal (e.g., a resistance value) obtained from the first signal line WS1. At least a portion of the first signal line WS may be positioned in a flexible printed circuit board (e.g., the flexible printed circuit board 490 of FIG. 13). The electrical signal obtained from the conductive pin 420 may be connected to the ground using the second signal line WS2. The ground may be a ground layer of the circuit board 380. The first signal line WS1 may be a positive signal line of the conductive pin 420. The second signal line WS2 may be a positive signal line of the conductive pin 420.

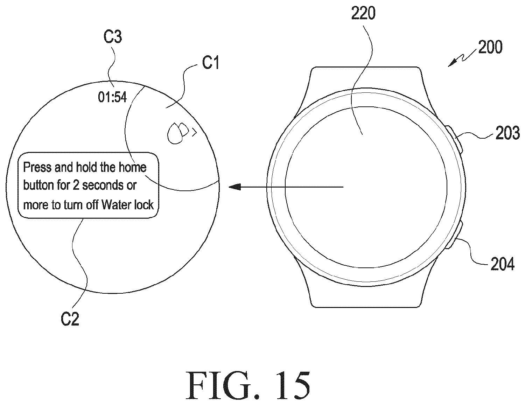

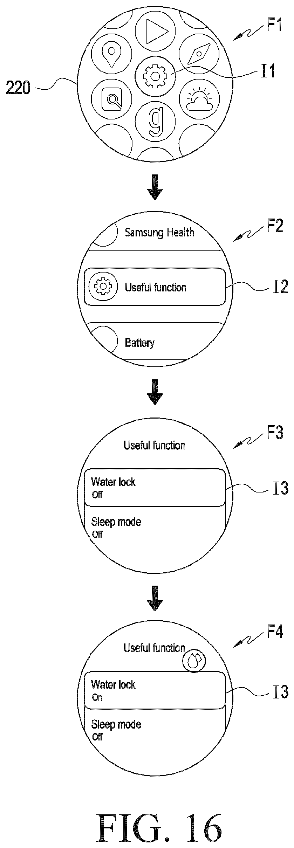

FIG. 15 is a view illustrating a state in which moisture is introduced into an electronic device according to an embodiment of the disclosure. FIG. 16 is a view illustrating a setting of a water lock mode according to an embodiment of the disclosure.

Referring to FIGS. 15 and/or 16, the electronic device 200 may set or release the water lock mode using the display 220. The water lock mode may be a function for blocking unintended touch and/or input by a fluid (e.g., water). For example, the water lock mode may include an operation of blocking an input to a component (e.g., the display 220) of the electronic device 200. The configuration of the electronic device 200, the key input devices 203 and 204, and the display 220 of FIGS. 15 and/or 16 may be identical in whole or portion to the configuration of the electronic device 200, the key input devices 203 and 204, and the display 220 of FIGS. 2 and/or 4.

According to an embodiment, the processor 120 may change the state of the electronic device 200 based on information obtained using the conductive pin 420. For example, the processor 120 may set or release the water lock mode based on the resistance value obtained using the conductive pin 420.

Referring to FIG. 15, the electronic device 200 may provide the user with content for discharging moisture in a state in which moisture is introduced into the electronic device 200, using the display 220. For example, the display 220 may output a first content C1 that may provide the user with whether water is introduced. The first content C1 may be an icon or a picture reflecting moisture or water. The display 220 may provide a second content C2 capable of providing the user with an operation method for discharging water. For example, the second content C2 may include the sentence "Press and hold the home button for at least 2 seconds to turn off the water lock." The home button indicated by the second content C2 may be at least one of the key input devices 203 and 204.

According to an embodiment, the processor 120 may output sound from the speaker module 500 when the key input device 203 or 204 is pressed for a designated time (e.g., 2 seconds) or more in the water lock mode. As sound is output from the speaker module 500, at least a portion of the moisture introduced into the speaker hole (e.g., the speaker hole 411 of FIG. 6) may be discharged to the outside of the electronic device 200.

According to an embodiment, the display 220 may perform a designated third content C3 even when water is introduced. For example, the third content C3 may be information reflecting the current time.

According to an embodiment, whether to use the water lock mode may be manually and/or automatically changed. For example, the processor 120 may change whether to use the water lock mode based on the resistance value obtained using the conductive pin 420. Referring to another example (e.g., FIG. 16), the processor 120 may change whether to use the water lock mode based on the user's input. For example, referring to a first screen F1, the display 220 may provide a first icon I1 (e.g., a setting button). A second screen F2 may be a screen of the display 220 where a user input is applied to the first icon I1. The second screen F2 may provide a second icon I2 reflecting a useful function. A third screen F3 and a fourth screen F4 may be screens of the display 220 where a user input is applied to the second icon I2. The third screen F3 and the fourth screen F4 may provide a third icon I3 indicating whether the water lock is used. For example, whether the water lock has been performed may be changed based on a user input to the user's third icon I3.

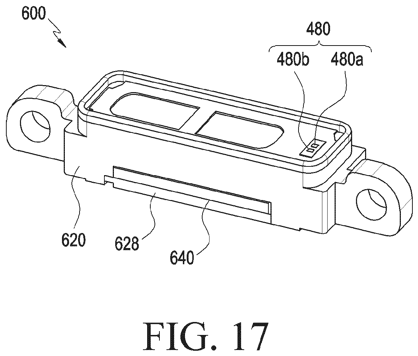

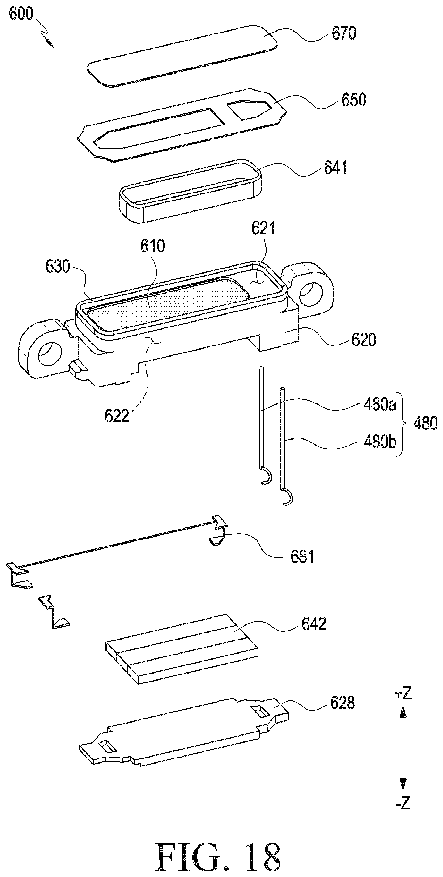

FIG. 17 is a perspective view illustrating a speaker module according to an embodiment of the disclosure. FIG. 18 is an exploded perspective view illustrating a speaker module according to an embodiment of the disclosure.

The configuration of the conductive pin 480 and the speaker module 600 of FIGS. 17 and/or 18 may be identical in whole or portion to the configuration of the conductive pin 420 and the speaker module 500 of FIGS. 7 and/or 8. For example, the description of the conductive pin 420, the diaphragm 510, the speaker frame 520, the yoke 528, the waterproof member 530, the coil 541, the magnet 542, the protection member 550, the protective screen 560 and the connecting member 581 of FIGS. 7 and/or 8 may be applied to the conductive pin 480, the diaphragm 610, the speaker frame 620, the yoke 628, the waterproof member 630, the coil 641, the magnet 642, the protection member 650, the protective screen 670 and the connecting member 681 of FIGS. 17 and/or 18.

According to an embodiment, the speaker frame 620 may include a first receiving area 621 for receiving the conductive pin 480 and a second receiving area 622 for receiving the diaphragm 610. For example, the first receiving area 621 may surround at least a portion of the conductive pin 480. The conductive pin 480 may penetrate a portion of the speaker frame 620. The second receiving area 622 may receive components (e.g., the diaphragm 610, the coil 641, and/or the magnet 642) for outputting sound. According to an embodiment, an end portion of the conductive pin 480 may face an upper portion (e.g., in the +Z direction) of the speaker module 600. For example, the end portion of the conductive pin 480 may protrude from the front surface (e.g., a surface facing +Z direction) of the first receiving area 621 of the speaker frame 620.

According to an embodiment, the conductive pin 480 may include a plurality of conductive pins 480a and 480b. For example, the conductive pin 480 may include a first conductive pin 480a and a second conductive pin 480b spaced apart from the first conductive pin 480a.

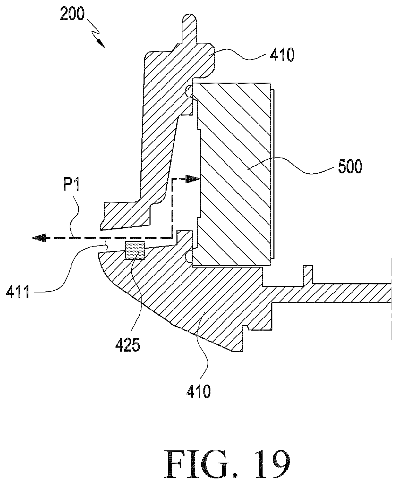

FIG. 19 is a cross-sectional view illustrating an electronic device including a conductive pin mounted on a housing according to an embodiment of the disclosure.

Referring to FIG. 19, an electronic device 200 may include a housing 410, a conductive pin 425, and a speaker module 500. The configuration of the housing 410 and the speaker module 500 of FIG. 19 may be identical in whole or portion to the configuration of the housing 410 and the speaker module 500 of FIG. 5.

According to an embodiment, the conductive pin 425 may detect moisture introduced into the inside (e.g., the speaker hole 411) of the electronic device 200. According to an embodiment, the conductive pin 425 may be connected to the housing 410. For example, at least a portion (e.g., an end portion) of the conductive pin 425 may be exposed in the speaker hole 411 of the housing 410. For example, the conductive pin 425 may detect moisture introduced into the sound path P1 through which sound generated by the speaker module 500 passes. According to an embodiment, based on the sound generated by the speaker module 500, moisture positioned adjacent to the conductive pin 425 may be discharged to the outside of the electronic device 200.

The configuration of the conductive pin 425 may be identical in whole or portion to the configuration of the conductive pin 420 described above (e.g., FIGS. 8 to 12). For example, the processor (e.g., the processor 120 of FIG. 1) may determine whether water has been introduced into the electronic device 200 based on the resistance value detected by the conductive pin 425. According to an embodiment, the conductive pin 425 may include a plurality of conductive pins.

The wearable electronic device may remain in contact with the user's body for a significant time. While the user wears the electronic device on the body, external moisture may flow into the electronic device.

According to an embodiment of the disclosure, the electronic device may detect moisture introduced into the electronic device using a conductive pin. For example, the electronic device may determine whether moisture is introduced based on the resistance value detected using the conductive pin. The electronic device may control whether a component (e.g., a display) of the electronic device is operated based on whether moisture is introduced. For example, the electronic device may manually and/or automatically perform the water lock mode. As the water lock mode is automatically performed, user convenience may be increased. Further, moisture adjacent to the conductive pin may be discharged to the outside of the electronic device by the output generated by the speaker module.

The disclosure is not limited to the foregoing embodiments but various modifications or changes may rather be made thereto without departing from the spirit and scope of the disclosure.

Other various effects may be provided directly or indirectly in the disclosure.

According to an embodiment of the disclosure, a wearable electronic device (e.g., the electronic device 200 of FIG. 2) may comprise a housing (e.g., the housing 210 of FIG. 2 and/or the housing 410 of FIG. 5), a speaker module (e.g., the speaker module 500 of FIG. 7) disposed on the housing, the speaker module comprising a speaker frame (e.g., the speaker frame 520 of FIG. 9) and a diaphragm (e.g., the diaphragm 510 of FIG. 9) id disposed in the speaker frame, a plurality of conductive pins (e.g., the conductive pin 420 of FIG. 8) at least partially positioned in the speaker frame, and a processor (e.g., the processor 120 of FIG. 1 and/or FIG. 14) configured to determine whether external moisture is introduced into the wearable electronic device based on a resistance value detected at the plurality of conductive pins. As the conductive pin is positioned in a component (e.g., the speaker module) inside the electronic device, the sensitivity of detecting moisture may be appropriately selected. For example, when the conductive pin is exposed to the outside of the housing, sensitivity may increase, decreasing user convenience.

According to an embodiment, the plurality of conductive pins may comprise a front end area (e.g., the first front end area 421a and the second front end area 421b of FIG. 11) protruding from an inner surface (e.g., the inner surface 522a of FIG. 9) of a side wall (e.g., the side wall 522 of FIG. 9) of the speaker frame. As the plurality of conductive pins protrudes from the inner surface of the side wall of the speaker assembly, the moisture adjacent to the conductive pins may be discharged to the outside of the electronic device due to an output (e.g., the vibration of the diaphragm) generated from the speaker assembly. Accordingly, the introduction and/or discharge of moisture into and/or from the electronic device may be appropriately determined.

According to an embodiment, the plurality of conductive pins may be insert-molded together with the speaker frame to be coupled with the speaker frame. As the plurality of conductive pins are insert-molded into the speaker frame, convenience of the manufacturing process and coupling strength between the plurality of conductive pins and the speaker frame may be increased.

According to an embodiment, the housing may comprise a speaker hole (e.g., the speaker hole 411 of FIG. 6B) configured to tranfer a sound generated from the speaker module to an outside of the wearable electronic device. The plurality of conductive pins may be configured to detect moisture introduced through the speaker hole.

According to an embodiment, the plurality of conductive pins may comprise a front end area (e.g., the front end area 421 of FIG. 11) at least partially positioned in the speaker hole and a rear end area (e.g., the rear end area 422 of FIG. 11) opposite to the front end area. The wearable electronic device may further comprise a flexible printed circuit board (e.g., the flexible printed circuit board 490 of FIG. 8) electrically connecting at least a portion of the rear end area to the processor.

According to an embodiment, the plurality of conductive pins may comprise a body portion (e.g., the body portion 423 of FIG. 11) between the front end area and the rear end area. The body portion may be coupled to the speaker frame.

According to an embodiment, the speaker module may comprise a coil (e.g., the coil 541 of FIG. 8) configured to vibrate the diaphragm, a magnet (e.g., the magnet 542 of FIG. 8) at least partially surrounded by the coil, and a speaker flexible printed circuit board (e.g., the speaker flexible printed circuit board 580 of FIG. 8) electrically connecting the coil and the processor.

According to an embodiment, the speaker module may comprise a protective screen (e.g., the protective screen 560 of FIG. 8) covering at least a portion of the diaphragm. The front end area (e.g., the front end area 421 of FIG. 11) of the plurality of conductive pins may be between the protective screen and the diaphragm.

According to an embodiment, the speaker frame may comprise a first receiving area (e.g., the first receiving area 621 of FIG. 18) in which the plurality of conductive pins is disposed and a second receiving area (e.g., the second receiving area 622 of FIG. 18) extending from the first receiving area and in which the diaphragm is disposed.

According to an embodiment, an end portion of the plurality of conductive pins may protrude from a front surface of the first receiving area.

According to an embodiment, the speaker module may comprise a protection member (e.g., the protection member 550 of FIG. 8) covering at least a portion of the diaphragm and disposed on an upper portion of the front end area of the plurality of conductive pins.

According to an embodiment, the plurality of conductive pins may comprise a first conductive pin (e.g., the first conductive pin 420a) and a second conductive pin (e.g., the second conductive pin 420b) spaced apart from the first conductive pin.

According to an embodiment, the wearable electronic device may comprise a memory (e.g., the memory 130 of FIG. 1) in the housing and configured to store a reference resistance value. The processor may determine that the moisture is introduced into the electronic device when a resistance value between the plurality of conductive pins is lower than the reference resistance value stored in the memory.

According to an embodiment, the electronic device may comprise a display (e.g., the display 220 of FIGS. 4, 15, and/or 16). the processor is configured to control an operation of the display based on whether the external moisture is introduced into the electronic device.

According to an embodiment, the processor may be configured to provide information for providing a user with content (e.g., the second content C2 of FIG. 15) for discharging the moisture in a state in which the moisture is introduced, using the display.

According to an embodiment of the disclosure, an electronic device (e.g., the electronic device 200 of FIG. 2) may comprise a housing (e.g., the housing 210 of FIG. 2 and/or the housing 410 of FIG. 5), a speaker module (e.g., the speaker module 500 of FIG. 7) disposed on the housing and including a diaphragm (e.g., the diaphragm 510 of FIG. 9) and a speaker frame (e.g., the speaker frame 520 of FIG. 9) receiving the diaphragm, and a conductive pin (e.g., the conductive pin 420 of FIG. 11) including a front end area (e.g., the front end area 421 of FIG. 11) protruding from an inner surface of a side wall of the speaker frame, a rear end area (e.g., the rear end area 422 of FIG. 11) opposite to the front end area and exposed to an outside of the speaker frame, and a body portion (e.g., the body portion 423 of FIG. 11) extending from the front end area to the rear end area and surrounded by the speaker frame.

According to an embodiment, the conductive pin may include a first conductive pin (e.g., the first conductive pin 420a of FIG. 11) and a second conductive pin (e.g., the second conductive pin 420b of FIG. 11) spaced apart from the first conductive pin.

According to an embodiment, the electronic device may comprise a processor (e.g., the processor 120 of FIG. 1) configured to determine whether external moisture is introduced into the electronic device based on a resistance value detected between the first conductive pin and the second conductive pin.

According to an embodiment, the speaker module may include a protective screen (e.g., the protective screen 560 of FIG. 9) covering at least a portion of the diaphragm, and the front end area of the conductive pin may be positioned between the protective screen and the diaphragm.

According to an embodiment, the housing may include a speaker hole (e.g., the speaker hole 411 of FIG. 5) for transferring a sound generated from the speaker module to an outside of the electronic device. The front end area of the conductive pin may be configured to detect moisture introduced through the speaker hole.

It is apparent to one of ordinary skill in the art that a wearable electronic device including a conductive pin as described above are not limited to the above-described embodiments and those shown in the drawings, and various changes, modifications, or alterations may be made thereto without departing from the scope of the disclosure.

## Claims

1. A wearable electronic device (101, 200), comprising:
a housing (201, 410);
a speaker module (500, 600) disposed on the housing, the speaker module comprising a speaker frame (520, 620) and a diaphragm (510, 610) disposed in the speaker frame;
a plurality of conductive pins (420, 480) at least partially positioned in the speaker frame; and
a processor (120) configured to determine whether external moisture is introduced into the wearable electronic device based on a resistance value detected at the plurality of conductive pins.

2. The wearable electronic device of claim 1, wherein the plurality of conductive pins comprise a front end area (421) protruding from an inner surface (522a) of a side wall (522) of the speaker frame.

3. The wearable electronic device of claim 1 or 2, wherein the plurality of conductive pins are insert-molded together with the speaker frame to be coupled with the speaker frame.

4. The wearable electronic device of any one of the preceding claims, wherein the housing comprises a speaker hole (411) configured to transfer a sound generated from the speaker module to an outside of the wearable electronic device, and
wherein the plurality of conductive pins are configured to detect moisture introduced through the speaker hole.

5. The wearable electronic device of any one of the preceding claims, wherein the plurality of conductive pins comprise a front end area (421) at least partially positioned in the speaker hole and a rear end area (422) opposite to the front end area, and
wherein the wearable electronic device further comprises a flexible printed circuit board (490) electrically connecting at least a portion of the rear end area to the processor.

6. The wearable electronic device of any one of the preceding claims, wherein the plurality of conductive pins comprise a body portion (423) between the front end area and the rear end area, and
wherein the body portion is coupled to the speaker frame.

7. The wearable electronic device of any one of the preceding claims, wherein the speaker module comprises a coil (541) configured to vibrate the diaphragm, a magnet (542) at least partially surrounded by the coil, and a speaker flexible printed circuit board (580) electrically connecting the coil and the processor.

8. The wearable electronic device of any one of the preceding claims, wherein the speaker module comprises a protective screen (560) covering at least a portion of the diaphragm, and
wherein the front end area (421) of the plurality of conductive pins is between the protective screen and the diaphragm.

9. The wearable electronic device of any one of the preceding claims, wherein the speaker frame comprises a first receiving area (621) in which the plurality of conductive pins is disposed and a second receiving area (622) extending from the first receiving area and in which the diaphragm is disposed.

10. The wearable electronic device of any one of the preceding claims, wherein an end portion of the plurality of conductive pins protrudes from a front surface of the first receiving area.

11. The wearable electronic device of any one of the preceding claims, wherein the speaker module comprises a protection member (550, 650) covering at least a portion of the diaphragm and disposed on an upper portion of the front end area (421) of the plurality of conductive pins.

12. The wearable electronic device of any one of the preceding claims, wherein the plurality of conductive pins comprise a first conductive pin (420a) and a second conductive pin (420b) spaced apart from the first conductive pin.

13. The wearable electronic device of any one of the preceding claims, further comprising a memory (130) in the housing and configured to store a reference resistance value,
wherein the processor is configured to determine that the moisture is introduced into the electronic device when a resistance value between the plurality of conductive pins is lower than the reference resistance value stored in the memory.

14. The wearable electronic device of any one of the preceding claims, further comprising a display (220),
wherein the processor is configured to control an operation of the display based on whether the external moisture is introduced into the electronic device.

15. The wearable electronic device of any one of the preceding claims, wherein the processor is configured to provide information for providing a user with content for discharging the moisture in a state in which the moisture is introduced, using the display.
